# EUROPEAN PATENT SPECIFICATION

(11) **EP 3 261 305 B1**
(45) Date of publication and mention of the grant of the patent: **07.08.2019**
(21) Application number: 17177165.2
(22) Date of filing: 21.06.2017
(51) Int. Cl.: H04W 84/04, H04L 12/751, H04L 12/911, H04L 12/717, H04L 12/24

(54) **METHOD OF SHARING NETWORK RESOURCE AND NETWORK COORDINATION APPARATUS**
VERFAHREN ZUR GEMEINSAMEN NUTZUNG EINER NETZWERKRESSOURCE UND NETZWERKKOORDINIERUNGSVORRICHTUNG
PROCÉDÉ DE PARTAGE DE RESSOURCES DE RÉSEAU ET APPAREIL DE COORDINATION DE RÉSEAU

(30) Priority: 23.06.2016 US 201662353598 P; 19.04.2017 TW 106113063
(43) Date of publication of application: 27.12.2017
(73) Proprietor: Industrial Technology Research Institute, Chutung, Hsinchu 31040 (TW)
(72) Inventor: CHANG, Hsien-Wen, 300 Hsinchu City (TW); LAI, Chia-Lin, 701 Tainan City (TW); TALAT, Samer T., 300 Hsinchu City (TW); CHUNDRIGAR, Shahzoob Bilal, 300 Hsinchu City (TW); CHIEN, Hsu-Tung, 412 Taichung City (TW)
(74) Representative: Krauns, Christian

(56) References cited:
- WO-A1-2012/055446
- US-A1- 2015 139 238
- US-A1- 2015 381 515

## Description

### TECHNICAL FIELD

The disclosure relates to a method of sharing network resource and a network coordination apparatus.

### BACKGROUND

In order to provide convenient mobile network (cellular network) service, network operators usually need to use rigid and high cost equipment, complicated control-plane protocol, conventional vendor-specific configuration interfaces and so forth.

Different core networks have been built by different network operators so that user devices corresponding to different network operators can access internet though their own core networks. However, due to concerns such as independent operation and separate management, different network operators cannot freely share their own networks.

The WO 2012/055446 A1 discloses a method of providing resources from a physical network, provided by at least one physical network provider, to a virtual network provider. For this method, the following steps are performed: a) identifying a need for certain resources at the virtual network provider; b) requesting resources from the at least one physical network provider; c) conducting virtualization for creating the virtual network by: c1) identifying and selecting by the at least one physical network provider resources in the physical network; c2) isolating the selected resources from other resources of the physical network and reserving them for exclusive use in the virtual network; and c3) attaching unique identification, address and access information to the isolated and reserved resources in order to enable exclusive accessibility in the virtual network; d) reporting, from the physical network provider to the virtual network provider, a result of the virtualization with information concerning identification, addressability and accessibility of the selected resources; and e) handing over control, from the physical network provider to the virtual network provider, of the resources reserved. The US 2015/381515 A1 discloses techniques for representing services, network resources, and relationships between such services and resources in a graph database with which to validate, provision, and manage the services in near real-time. The controller device includes at least one processor; and at least one memory to store a graph database comprising a graph that represents network resources and relationships between network resources. The controller device receives, at an application programming interface, a data-interchange formatted message that indicates a service request to configure a network service; queries, at least a portion of the plurality of the graph, to determine whether a set of the plurality of network resources can satisfy the service request to provision the network service within the network; and configures the set of the plurality of network resources to provide the network service.

### SUMMARY

According to the present invention there is provided a method of sharing a network resource according to claim 1, and a network coordination apparatus according to claim 6. Embodiments are further defined by the dependent claims.

The disclosure is directed to a method of sharing network resource and a network coordination apparatus capable of dynamically allocating network resource to different tenants in response to request of which and status of a shared transport network. Accordingly, different tenants can independently and flexibly share the resource of the shared transport network and complexity of network sharing setting can be simplified.

According to one embodiment, a method of sharing network resource is provided. The method includes following steps. A resource sharing request is firstly received from a tenant, and a controller is requested to determine whether resource of a shared transport network is satisfied with the resource sharing request. The controller is configured to manage a plurality of forward devices in the shared transport network. Then, a tenant ID is generated for the tenant when the controller determines the resource of the shared transport network is satisfied with the resource sharing request. The tenant ID is transmitted to the tenant. The tenant returns at least one group ID and at least one transport service type corresponding to each of the at least one group ID in response. The controller is requested to generate at least one packet header for the at least one transport service type corresponding to the each of the at least one group ID. Furthermore, the controller is requested to update a plurality of flow tables of the plurality of forward devices according to the at least one packet header.

According to another embodiment, a network coordination apparatus is provided. The network coordination apparatus includes an interface circuit and a processing circuit. The processing circuit is coupled to the interface circuit. The processing circuit is configured to perform following steps. The processing circuit firstly receives a resource sharing request from a tenant, and requests a controller to determine whether resource of a shared transport network is satisfied with the resource sharing request. The controller is configured to manage a plurality of forward devices in the shared transport network. Then, the processing circuit generates a tenant ID for the tenant when the controller determines the resource of the shared transport network is satisfied with the resource sharing request, and the processing circuit transmits the tenant ID to the tenant. The tenant returns at least one group ID and at least one transport service type corresponding to each of the at least one group ID in response. The processing circuit requests the controller to generate at least one packet header for the at least one transport service type corresponding to each of the at least one group ID. Furthermore, the processing circuit requests the controller to update a plurality of flow tables of the plurality of forward devices according to the at least one packet header.

### BRIEF DESCRIPTION OF THE DRAWINGS

FIG. 1 is a schematic diagram illustrating a network system according to an embodiment of the present disclosure.
FIG. 2 is a schematic flow diagram illustrating the method of sharing network resource according to the embodiment of the present disclosure.
FIG. 3 is a schematic diagram illustrating a network system that the network sharing module coordinates the controller to control the forward device in response to a request of the tenant according to an embodiment of the present disclosure.

In the following detailed description, for purposes of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

### DETAILED DESCRIPTION

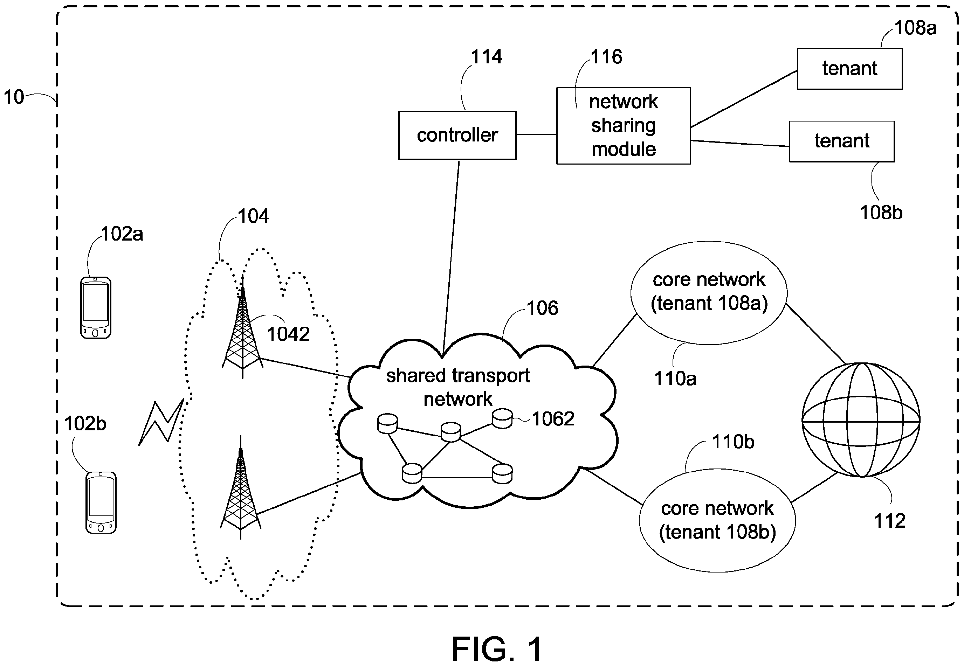

FIG. 1 is a schematic diagram illustrating a network system according to an embodiment of the present disclosure. In the network system 10 shown in FIG. 1, the user devices 102a and 102b can connect to the shared transport network 106 through a regional radio access network 104. Through the shared transport network 106, the regional radio access network 104 is further connected to the core networks 110a and 110b, which are respectively corresponding to tenants 108a, 108b. Then, the user devices 102a and 102b can access the internet 112.

For the sake of illustration, the embodiment in FIG. 1 shows only two user devices 102a, 102b, two tenants 108a, 108b and two core networks 110a, 110b, but the present disclosure is not limited to the embodiment. According to another embodiment, the network system may include at least one user device, at least one tenant and at least one core network.

The tenants 108a, 108b can be, for example, a physical network operator, a virtual network operator, or a service provider. In this embodiment, the core networks 110a and 110b are respectively built or rent by the tenants 108a and 108b. The user devices 102a and 102b are users of the tenants 108a and 108b, respectively.

The radio access network 104 includes, for example, at least one base station facility 1042, for providing radio access service to the user devices 102a and 102b. In this embodiment, the base station facility 1042 can be shared by the user devices (for example, user devices 102a and 102b) of different tenants.

The shared transport network 106 includes at least one forward device 1062 being in communication with each other. The forward device 1062 can be a switch, a router, or any types of network node packet capable of receiving and transmitting packets according to a specific rule.

Each of the forward devices 1062 may have, for example, a flow table, and the flow table may include at least one flow entry to describe information such as packet forward rule, execution action and transmission statistics and so forth. Among the information, for example, the packet forward rule may exist in the flow entry in a format of packet header.

The forward device 1062 may refer to the flow table to determine how the received packet(s) should be processed. For example, when a forward device 1062 receives a packet, the forward device 1062 parses the information of the packet and compares the parsed information and the rule described in the flow entry in order to forward the packet to a specific network node.

In this embodiment, different tenants 108a, 108b may share the transport resource of the shared transport network 106 through coordination of the controller 114 and the network sharing module 116. Therefore, the data packet of the user device 102a can be transmitted to the core network 110a corresponding to the tenant 108a through the shared transport network 106, and the data packet of the user device 102b can be transmitted to the core network 110b corresponding to the tenant 108b through the shared transport network 106.

The controller 114 centrally manages the forward device 1062 in the shared transport network 106. For example, the controller 114 may add, modify or delete packet forward rule in each of the forward device 1062 and update its flow table.

The network sharing module 116 is in communication with the tenants 108a, 108b and the controller 114. According to an embodiment of the present disclosure, the tenants 108a, 108b can communicate with the network sharing module 116 through a representational state transfer (hereinafter, REST) application interface, and the network sharing module 116 and controller 114 can communicate with each other through the REST application interface.

The network sharing module 116 receives requests about using the shared transport network 106 from the tenants 108a, 108b. In response to requests from the tenants 108a, 108b, the network sharing module 116 coordinates the controller 114 to load, update, or delete a specific packet forward rule in the forward device 1062, and each of the tenants 108a, 108b can plan and use the network resource of the shared transport network 106 under the capability of the shared transport network 106.

The controller 114 and the network sharing module 116 may be implemented by hardware, software, or a combination of both. According to an embodiment, the controller 114, is, for example, a software-defined Network (hereinafter, SDN) controller. The network sharing module 116, for example, is a network sharing application module at upper layer of the controller 114.

The controller 114 and the network sharing module 116 may be jointly implemented at an identical calculation device (for example, computer) or separately implemented by different calculation devices. A calculation device for implementing functions of the network sharing module 116 is defined as a network coordination apparatus. The network coordination apparatus may include an interface circuit and a processing circuit coupled to the interface circuit. The interface circuit is, for example, an input/output (hereinafter, I/O) circuit, used for transceiving signal. The processing circuit may be, for example, a micro processing circuit, a micro controller, a digital signal processing circuit (hereinafter, DSP), a programmable logic device (hereinafter, PLD), a state machine, an independent hardware circuit or any other suitable control logic for implementing functions of the network sharing module 116 as described in the present disclosure. Generally speaking, the procedure and logic flow described in the present disclosure can be executed by a programmable processing circuit executing at least one computer program to implement the functions described in the context.

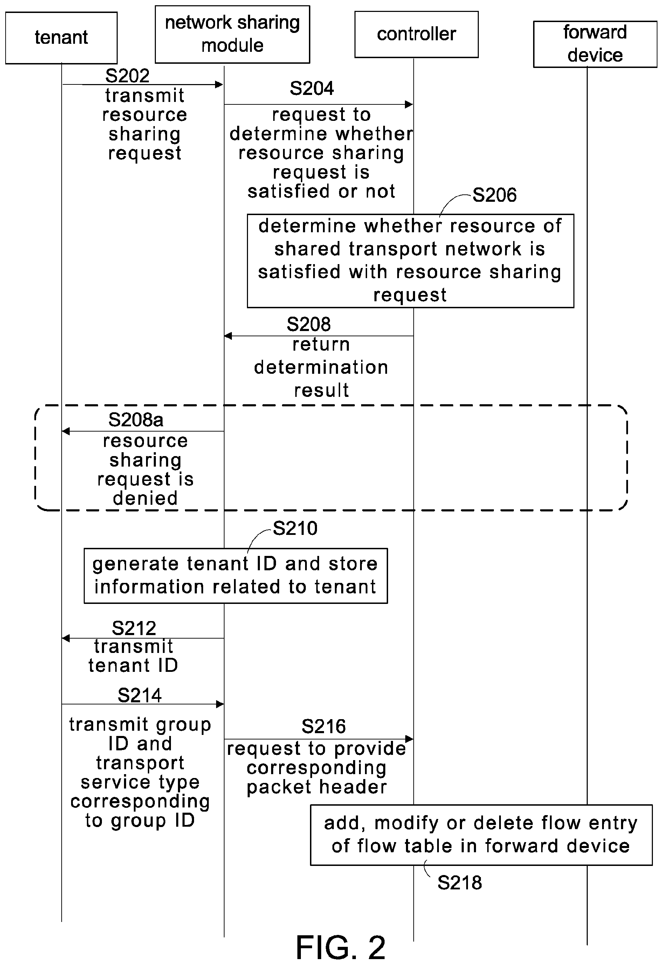

FIG. 2 is a schematic flow diagram illustrating the method of sharing network resource according to the embodiment of the present disclosure.

In step S202, the tenant (for example, the tenant 108a or the tenant 108b) transmits a resource sharing request to the network sharing module (for example, the network sharing module 116). The tenant may be, for example, a physical network operator, a virtual network operator, or a service provider intending to use the resource of the shared transport network.

According to an embodiment of the present disclosure, the network sharing module provides a request template so that the tenant can input the resource sharing request. The resource sharing request includes, for example, a bandwidth request value needed by the tenant, or other QoS parameter. The request template may be implemented through, for example, the REST application interface.

In step S204, the network sharing module requests the controller (for example, controller 114) to determine whether the resource of the shared transport network (for example, the shared transport network 106) is satisfied with the resource sharing request.

In step S206, the controller determines whether the resource of the shared transport network is satisfied with the resource sharing request.

For example, the controller determines whether the remaining available transmission bandwidth of the shared transport network is sufficient to support the bandwidth request value as requested by the tenant. Then, the controller accordingly determines whether the resource of the shared transport network is satisfied with the resource sharing request.

In step S208, the controller returns a determination result to the network sharing module.

In a case that the determination result shows that the resource of the shared transport network is not satisfied with the resource sharing request, for example, the remaining available transmission bandwidth of the shared transport network is not sufficient for the bandwidth request value described in the resource sharing request, the network sharing module informs the tenant that currently the shared transport network cannot provide resource for sharing in response. Then, the whole flow of sharing network resource suspends, as shown by step S208a.

On the other hand, when the determination result shows that the resource of the shared transport network is satisfied with the resource sharing request, in step S210, the network sharing module generates a tenant identifier (hereinafter, ID) for the tenant in response. Moreover, the network sharing module stores information related to the tenant. The information related to the tenant can be information such as available transmission bandwidth, available virtual network topology and so forth.

In step S212, the network sharing module transmits the tenant ID to the tenant.

In step S214, the tenant returns at least one group ID to the network sharing module. The tenant also transmits a transport service type corresponding to the group ID to the network sharing module. The transport service type is, for example, a service type to be used by the tenant.

For example, according to the acquired tenant ID, the tenant can request for various transport service type to the network sharing module, and define the transport service types with their corresponding group ID. The group IDs and their corresponding transport service types are transmitted to the network sharing module in return.

In an embodiment, the tenant utilizes the REST application interface to input the requested transport service type and its corresponding group ID in a request template being provided by the network sharing module.

In step S216, the network sharing module requests the controller to generate at least one packet header for the transport service type corresponding to each group ID so that the controller can update the flow table of the forward device.

The packet header, for example, is a portion of the flow entry that describes the packet forward rule. Alternatively speaking, the network sharing module requests the controller to load at least one specific packet forward rule for transmitting packet of specific service type to the forward device in the shared transport network.

In step S218, the controller responds the request of the network sharing module. According to the generated packet header, the controller adds, modifies or deletes flow entry of the flow table in the forward device. Therefore, the packet forward rule satisfied with the transport service type as requested by the tenant can be implemented in the shared transport network.

In an embodiment, the group ID returned by the tenant is assumed to include a first group ID and a second group ID. The first group ID is corresponding to the first transport service type requested by a tenant, and the second group ID is corresponding to the second transport service type requested by the same tenant. The first transport service type and second transport service type are, for example, corresponding to different service types. The network sharing module may request controller to generate at least one first packet header specific to the first transport service type, and the controller updates flow table of the forward device according to the at least one first packet header. The network sharing module may also request the controller to generate at least one second packet header to the second transport service type, and the controller updates the flow table of the forward device according to the at least one second packet header.

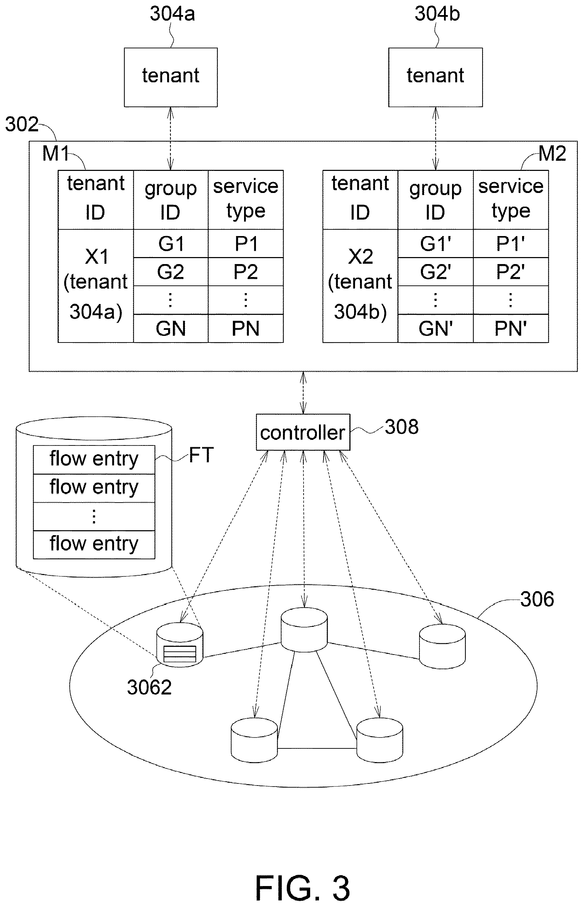

In addition, the network sharing module may create a mapping table corresponding to each tenant. Based on the mapping table, the network sharing module maps the first group ID to at least one of the first packet header provided by the controller and maps the second group ID to the at least one second packet header provided by the controller. Details of the mapping table will be further illustrated in tables 1∼4 and FIG. 3.

According to the embodiment of the present disclosure, the network sharing module detects and manages the resource sharing status of the shared transport network corresponding to each tenant. For the tenants being allowed to use the resource of the shared transport network, the network sharing module respectively assigns a specific tenant ID to these tenants. Then, these tenants request the transport service type to the network sharing module based on its assigned tenant ID. Each transport service type is corresponding to a group ID. The network sharing module may record mapping relationship between the group IDs and their corresponding transport service types. The network sharing module also requests the controller to provide corresponding packet header for different transport service types. Accordingly, the controller modifies the flow tables of the forward devices.

As illustrated above, the request of the tenant may be automatically mapped to the flow entry of the forward device through coordination of the network sharing module and the controller. In a case that the tenant wants to use the shared transport network resource, the tenant needs to input its request in the request template being provided by the network sharing module. Then, the transport service requested by the tenant can be implemented in the shared transport network, without the need of setting each of the forward devices in the shared transport network. Then, the complexity of network sharing setting of the tenant can be simplified dramatically. Besides, after the tenant received the tenant ID, the transport service type requested by the tenant can be dynamically updated or deleted. That is, different tenants keep their independency and flexibility of managing resource of the shared transport network.

For the sake of illustration, FIG. 3 illustrates a network system according to an embodiment of the present disclosure. In the network system shown in FIG. 3, how the network sharing module coordinates the controller to manage the forward devices in the shared transport network when two tenants request for sharing the resource in the shared transport network is illustrated.

FIG. 3 is a schematic diagram illustrating a network system that the network sharing module coordinates the controller to control the forward device in response to a request of the tenant according to an embodiment of the present disclosure.

In this example, the network sharing module 302 is assumed to provide the network resource in the shared transport network 306 to the tenants 304a and 304b. The shared transport network 306 includes multiple forward devices 3062. These forward devices 3062 are centrally managed by the controller 308. The forward device 3062 is, for example, an SDN-based switch. The controller 308 is, for example, an SDN controller.

The network sharing module 302 creates a mapping table corresponding to each of the tenants (for example, tenants 304a and 304b). The mapping table includes a tenant ID of the tenant, at least one group ID, and transport service type corresponding to each of the group IDs. The mapping table further includes at least one packet header that is generated by the controller as being requested by the network sharing module 302.

As shown in FIG. 3, the network sharing module 302 stores mapping tables M1, M2 corresponding to tenants 304a, 304b. The mapping tables M1, M2 mainly include three fields: a tenant ID, a group ID, and a service type.

In mapping table M1, the tenant ID X1 represents a specific name or number being assigned by the network sharing module 302 to the tenant 304a. The tenant 304a may propose the request of the transport service type to the network sharing module 302 based on the tenant ID X1, and accordingly define different transport service types corresponding to the group IDs. According to another embodiment, the mapping table M1 further includes the packet header information being requested to and generated by the controller 308.

For example, after receiving the tenant ID X1 from the network sharing module 302, the tenant 304a inputs the request template provided by the network sharing module 302 with the service type to be requested. Each of the service types is corresponding to a group ID. As shown in FIG. 3, the groups IDs G1∼GN are respectively corresponding to the service types P1∼PN, and N is a positive integer.

Similarly, in mapping table M2, the tenant ID X2 represents a specific name or number being assigned by the network sharing module 302 to the tenant 304b. The tenant 304b may propose the request of the transport service type to the network sharing module 302 based on the tenant ID X2.

For example, after receiving the tenant ID X2 provided by the network sharing module 302, the tenant 304b inputs the request template provided by the network sharing module 302 with the service type to be requested. Each of the service types is corresponding to a group ID. As shown in FIG. 3, the groups IDs G1'∼GN' are respectively corresponding to the service types P1'∼PN', and N' is a positive integer.

The mapping tables M1, M2 are stored in the network sharing module 302. Compared with the controller 308 and the forward device 3062, the network sharing module 302 is the one knows the mapping relationship between the group IDs and their corresponding service types. Later, the tenant (for example, the tenant 304a) describes its tenant ID (for example, the tenant ID X1) while issuing commands. The tenant also uses a specific group ID (for example, the group ID G1) to modify or delete a specific transport service type (for example, the service type P1).

Based on the mapping table M1, M2, the network sharing module 302 requests the controller 308 to provide different packet headers corresponding to different service types P1∼PN, P1'∼PN'. The packet header represents the packet forward rule of the flow entry in the forward device 3062.

In response to the request of the network sharing module 302, the controller 308 will add, modify or delete the flow entry of the flow table FT in the forward device 3062. Then, the forward device 3062 can process and forward the packet according to packet forward rule being satisfied with the requests of the tenants 304a, 304b.

Furthermore, because the network sharing module 302 assigns different tenant ID to different tenants, the tenants 304a and 304b are corresponding to separate and independent mapping relationships between the group IDs and the service types.

Tables 1∼4 further illustrate information stored in the mapping table. For the sake of convenience, the mapping table M1 corresponding to the tenant 302a is illustrated as an example. However, in practical application, content and format of the mapping table are not limited.

According to the example in table 1, after receiving the tenant ID "X1", the tenant 302a proposes a request of transport service type to the network sharing module 302. The request of transport service type includes two service types, that is, a service type of control-plane and a service type of user-plane. These two service types are respectively corresponding to group IDs "G1" and "G2".

The network sharing module 302 records mapping relationships between the tenant 302a, the tenant ID "X1" and the group IDs "G1", "G2". The network sharing module 302 also records the mapping between the group ID"G1", "G2" and their corresponding service types. The recorded mapping relationship may be represented by, for example, a mapping table, or other suitable data structures.

In response to the request of the network sharing module 302, the controller 308 provides at least one first packet header for the service type corresponding to the group ID "G1" , and provide at least one second packet header for the service type corresponding to the group ID "G2". According to an embodiment, the network sharing module 302 records the mapping relationship between the group ID "G1" and the first packet header, and the mapping relationship between the record group ID "G2" and the second packet header in the mapping table M1. With the mapping table M1, the network sharing module 302 is capable of mapping the group ID "G1" to the first packet header provided by the controller 308, and mapping the group ID "G2" to the second packet header provided by the controller 308.

**table 1**

| | tenant ID | group ID | service type |
|---|---|---|---|
| tenant 302a | X1 | G1 | service type of control-plane |
| | | G2 | service type of user-plane |

In Long Term Evolution (hereinafter, LTE) network system, different priority sequences can be assigned to packets corresponding to the same control-plane. For example, for the service type of control-plane, priority of login attach service type may be higher than priority of a service type of tracking area update. Alternatively, for service type of the user-plane, the priority of service type of VoIP is probably higher than the priority of the service type of web-browsing. The tenant 302a may determine different group IDs specifically for service types in each of the control-plane and the user-plane. After creating the mapping relationship between the tenant ID, the group ID, and the packet type, the network sharing module 302 requests the controller 308 to update the flow table FT of the at least one forward device 3062 in the shared transport network 306. Therefore, while forwarding packets according to the flow table FT, the at least one forward device 3062 follows the priority sequence to forward packets in the control-plane and data-plane. Tables 2∼ 4 are examples showing different group IDs are corresponding to different service types of the control-plane and the user-plane.

Table 2 is an example of another mapping table. According to table 2, after obtaining the tenant ID "X1", the tenant 302a proposes a request of transport service type to the network sharing module 302. The request of transport service type can include four service types, a service type 1 of control-plane, a service type 2 of control-plane, a service type 1 of user-plane, and a service type 2 of user-plane. These four service types are respectively mapped to group IDs "G1", "G2", "G3"and "G4".

In practical application, the tenant 302a may define more categories of priority sequence for service types of the control-plane and user-plane, and map the priority sequence to different group IDs.

**table 2**

| | tenant ID | group ID | service type |
|---|---|---|---|
| tenant 302a | X1 | G1 | service type 1 of control-plane |
| | | G2 | service type 2 of control-plane |
| | | G3 | service type 1 of user-plane |
| | | G4 | service type 2 of user-plane |

Please refer to table 3. Table 3 is an application that the service type based on the example shown in table 2 is further defined. In table 3, the service type 1 of the control-plane is assumed to be an Attach service type, the service type 2 of the control-plane is assumed to be a Handover service type, the service type 1 of the user-plane is assumed to be a VoIP service type, and the service type 2 of user-plane is assumed to be a video service type.

**table 3**

| | tenant ID | group ID | service type |
|---|---|---|---|
| tenant 302a | X1 | G1 | service type 1 of control-plane: Attach |
| | | G2 | service type 2 of control-plane: Handover |
| | | G3 | service type 1 of user-plane: VoIP |
| | | G4 | service type 2 of user-plane: Video |

Please refer to table 4. FIG. 4 is another application that the service types based on the example shown in table 2 are further defined. The service type 1 of the control-plane is assumed to be a mobility management entity (hereinafter, MME) service type, the service type 2 of control-plane is assumed to be a serving gateway (hereinafter, S-GW) service type, the service type 1 of user-plane is assumed to be a VoIP service type, and the service type 2 of user-plane is assumed to be a video service type.

**table 4**

| | tenant ID | group ID | service type |
|---|---|---|---|
| tenant 302a | X1 | G1 | service type 1 of control-plane: MME |
| | | G2 | service type 2 of control-plane: S-GW |
| | | G3 | service type 1 of user-plane: VoIP |
| | | G4 | service type 2 of user-plane: Video |

According to illustrations in tables 1∼4, according to its own demand or plan, each of the tenants may transmit different requests of the transport service type to the network sharing module. Each transport service type is corresponding to a group ID. The network sharing module may create a mapping table for each tenant, so that the mapping relationship between the group IDs and their corresponding services are recorded.

After creating the mapping table, the network sharing module requests the controller to provide packet headers appropriate to the various service types. The controller accordingly updates the flow tables in the forward devices, and the packet forward rule satisfied with request of the tenant are implemented in the shared transport network. According to some embodiments, the network sharing module further records mapping relationship between the packet headers and the group IDs in the mapping table.

It will be apparent to those skilled in the art that various modifications and variations can be made to the disclosed embodiments. It is intended that the specification and examples be considered as exemplary only, with the scope of the invention being defined solely by the appended claims.

## Claims

1. A method of sharing network resource in a network system (10) in which a first user device (102a) is able to access the Internet (112) via a shared transport network (106) and a first core network (110a) which is built or rent by a first tenant (108a), a network sharing module (116) being in communication between a controller (114) and the first tenant (108a), the method comprising steps of:
receiving, by the network sharing module (116) implemented on a calculation device, a first resource sharing request from the first tenant (108a);
requesting, by the network sharing module (116), the controller (114) to determine whether the first resource sharing request is satisfied by a resource of the shared transport network (106), wherein the controller (114) is configured to manage a plurality of forward devices (1062) in the shared transport network (106);
generating, by the network sharing module (116), a first tenant identifier for the first tenant (108a) when the controller (114) determines that the resource sharing request is satisfied by the resource of the shared transport network (106);
transmitting, by the network sharing module (116), the first tenant identifier to the first tenant (108a), wherein the first tenant (108a) returns at least one first group identifier and at least one first transport service type corresponding to each of the at least one first group identifier based on the first tenant identifier assigned by the network sharing module (116);
requesting, by the network sharing module (116), the controller (114) to generate at least one first packet header for the at least one first transport service type corresponding to the each of the at least one first group identifier; and
requesting, by the network sharing module (116), the controller (114) to update a plurality of flow tables of the plurality of forward devices (1062) according to the at least one first packet header,
wherein data packets of the first user device (102a) are transmitted to the first core network (110a) through the shared transport network (106).

2. The method according to claim 1, wherein a second user device (102b) is able to access the Internet (112) via the shared transport network (106) and a second core network (110b) which is built or rent by a second tenant (108b), the network sharing module (116) being in communication between the controller (114) and the second tenant (108b), the method further comprising steps of:
receiving, by the network sharing module (116), a second sharing request from the second tenant (108b);
providing, by the network sharing module (116), the second resource sharing request to the controller (114), wherein the controller (114) determines whether the second resource sharing request is satisfied by the resource of the shared transport network (106);
generating, by the network sharing module (116), a second tenant identifier for the second tenant (108b) when the controller (114) determines that the second resource sharing request is satisfied by the resource of the shared transport network (106);
transmitting, by the network sharing module (116), the second tenant identifier to the second tenant (108b), wherein the second tenant (108b) returns at least one second group identifier and at least one second transport service type corresponding to each of the least one second group identifier based on the second tenant identifier assigned by the network sharing module (116);
requesting, by the network sharing module (116), the controller (114) to generate at least one second packet header for the at least one second transport service type;
requesting, by the network sharing module (116), the controller (114) to update the plurality of flow tables of the plurality of forward devices (1062) according to the at least one second packet header, wherein data packets of the second user device (102b) are transmitted to the second core network (110b) through the shared transport network;
mapping the at least one first group identifier to the at least one first packet header based on a mapping table; and
mapping the at least one second group identifier to the at least one second packet header based on the mapping table.

3. The method according to claim 2, wherein the at least one first transport service type and the at least one second transport service type are corresponding to different service types.

4. The method according to any one of the claims 2 to 3, further comprising steps of:
creating a first mapping table for the first tenant (108a), wherein the first mapping table comprises the first tenant identifier, the at least one first group identifier, and the at least one first transport service type corresponding to the each of the at least one first group identifier; and
creating a second mapping table for the second tenant (108b), wherein the second mapping table comprises the second tenant identifier, the at least one second group identifier, and the at least one second transport service type corresponding to the each of the at least one second group identifier.

5. The method according to any one of the claims 2 to 4, further comprising a step of:
providing a request template so that the first tenant (108a) inputs the first resource sharing request, wherein the first resource sharing request comprises a bandwidth request value.

6. A network coordination apparatus (116) for a network system (10) comprising a first user device (102a) being able to access Internet (112) via a shared transport network (106) and a first core network (110a) which is built or rent by a first tenant (108a), the network coordination apparatus (116) being in communication between a controller (114) and the first tenant (108a), the network coordination apparatus comprising:
an interface circuit; and
a processing circuit, coupled to the interface circuit, being configured to:
receive a first resource sharing request from the first tenant (108a);
request the controller (114) to determine whether the first resource sharing request is satisfied by a resource of the shared transport network (106), wherein the controller (114) is configured to manage a plurality of forward devices (1062) in the shared transport network (106);
generate a first tenant identifier for the first tenant (108a) when the controller (114) determines that the resource sharing request is satisfied by the resource of the shared transport network (106);
transmit the first tenant identifier to the first tenant (108a), wherein the network coordination apparatus receives from the first tenant (108a) at least one first group identifier and at least one first transport service type corresponding to each of the at least one first group identifier based on the first tenant identifier;
request the controller (114) to generate at least one first packet header for the at least one first transport service type corresponding to each of the at least first one group identifier; and
request the controller (114) to update a plurality of flow tables of the plurality of forward devices (1062) according to the at least one first packet header,
wherein data packets of the first user device (102a) are transmitted to the first core network (110a) through the shared transport network (106).

7. The network coordination apparatus according to claim 6, wherein a second user device (102b) is able to access the Internet (112) via the shared transport network (106) and a second core network (110b) which is built or rent by a second tenant (108b), the network sharing module (116) being in communication between the controller (114) and the second tenant (108b), and the processing circuit is further configured to:
receive a second sharing request from the second tenant (108b);
provide the second resource sharing request to the controller (114), wherein the controller (114) determines whether the second resource sharing request is satisfied by the resource of the shared transport network (106);
generate a second tenant identifier for the second tenant (108b) when the controller (114) determines that the second resource sharing request is satisfied by the resource of the shared transport network (106);
transmit the second tenant identifier to the second tenant (108b), wherein the second tenant (108b) returns at least one second group identifier and at least one second transport service type corresponding to each of the least one second group identifier based on the second tenant identifier;
request the controller (114) to generate at least one second packet header for the at least one second transport service type;
request the controller (114) to update the plurality of flow tables of the plurality of forward devices (1062) according to the at least one second packet header, wherein data packets of the second user device (102b) are transmitted to the second core network (110b) through the shared transport network;
map the at least one first group identifier to the at least one first packet header based on a mapping table; and
map the at least one second group identifier to the at least one second packet header based on the mapping table.

8. The network coordination apparatus according to claim 7, wherein the processing circuit is further configured to:
create a first mapping table for the first tenant (108a), wherein the first mapping table comprises the first tenant identifier, the at least one first group identifier, and the at least one first transport service type corresponding to the each of the at least one first group identifier; and
create a second mapping table for the second tenant (108b), wherein the second mapping table comprises the second tenant identifier, the at least one second group identifier, and the at least one second transport service type corresponding to the each of the at least one second group identifier.

9. The network coordination apparatus according to any one of the claims 6 to 8, wherein the processing circuit is further configured to:
provide a request template so that the first tenant (108a) inputs the first resource sharing request, wherein the first resource sharing request comprises a bandwidth request value.

## Patentansprüche

1. Verfahren zur gemeinsamen Nutzung von Netzwerkressourcen in einem Netzwerksystem (10), bei dem ein erstes Benutzergerät (102a) über ein gemeinsames Transportnetzwerk (106) und ein erstes Kernnetzwerk (110a), das von einem ersten Mandanten (108a) gebaut oder gemietet wird, auf das Internet (112) zugreifen kann, wobei ein Netzwerkfreigabemodul (116) in Kommunikation zwischen einer Steuerung (114) und dem ersten Mandanten (108a) steht, wobei das Verfahren die folgenden Schritte umfasst:
ein Empfangen einer ersten Anforderung zur gemeinsamen Nutzung von Ressourcen von dem ersten Mandanten (108a) durch das auf einer Rechenvorrichtung implementierte Netzwerkfreigabemodul (116),
ein Anfordern an die Steuerung (114) durch das Netzwerkfreigabemodul (116), zu bestimmen, ob die erste Anforderung zur gemeinsamen Nutzung von Ressourcen von einer Ressource des gemeinsam genutzten Transportnetzwerks (106) erfüllt wird, wobei die Steuerung (114) ausgestaltet ist, eine Vielzahl von Weiterleitungsgeräten (1062) in dem gemeinsam genutzten Transportnetz (106) zu verwalten,
ein Erzeugen einer ersten Mandantenkennung für den ersten Mandanten (108a) durch das Netzwerkfreigabemodul (116), wenn die Steuerung (114) bestimmt, dass die Anforderung zur gemeinsamen Nutzung von Ressourcen von der Ressource des gemeinsam genutzten Transportnetzwerks (106) erfüllt wird,
ein Übertragen der ersten Mandantenkennung an den ersten Mandanten (108a) durch das Netzwerkfreigabemodul (116), wobei der erste Mandant (108a) mindestens eine erste Gruppenkennung und mindestens einen ersten Transportdiensttyp zurückgibt, die jeweils dem von der mindestens einen ersten Gruppenkennung basierend auf der ersten Mandantenkennung entsprechen, die von dem Netzwerkfreigabemodul (116) zugewiesen worden ist,
ein Anfordern an die Steuerung (114) durch das Netzwerkfreigabemodul (116) mindestens einen ersten Paketkopf für den mindestens einen ersten Transportdiensttyp zu erzeugen, der jeweils der mindestens einen ersten Gruppenkennung entspricht, und
ein Anfordern an die Steuerung (114) durch das Netzwerkfreigabemodul (116), eine Vielzahl von Flusstabellen der Vielzahl von Weiterleitungsgeräten (1062) gemäß dem mindestens einen ersten Paketkopf zu aktualisieren,
wobei Datenpakete des ersten Benutzergeräts (102a) über das gemeinsam genutzte Transportnetz (106) an das erste Kernnetzwerk (110a) übertragen werden.

2. Verfahren nach Anspruch 1, wobei eine zweite Benutzervorrichtung (102b) über das gemeinsam genutzte Transportnetz (106) und ein zweites Kernnetzwerk (110b), das von einem zweiten Mandanten (108b) gebaut oder gemietet wird, auf das Internet (112) zugreifen kann, wobei das Netzwerkfreigabemodul (116) in Kommunikation mit der Steuerung (114) und dem zweiten Mandanten (108b) steht, wobei das Verfahren ferner die folgenden Schritte umfasst:
ein Empfangen einer zweiten Freigabeanforderung von dem zweiten Mandanten (108b) durch das Netzwerkfreigabemodul (116),
ein Bereitstellen der zweiten Anforderung zur gemeinsamen Nutzung von Ressourcen durch das Netzwerkmodul (116) an die Steuerung (114), wobei die Steuerung (114) bestimmt, ob die zweite Anforderung zur gemeinsamen Nutzung von Ressourcen durch die Ressource des gemeinsam genutzten Transportnetzwerks (106) erfüllt ist,
ein Erzeugen einer zweiten Mandantenkennung für den zweiten Mandanten (108b) durch das Netzwerkfreigabemodul (116), wenn die Steuerung (114) bestimmt, dass die zweite Anforderung zur gemeinsamen Ressourcennutzung von der Ressource des gemeinsam genutzten Transportnetzwerks (106) erfüllt wird,
ein Übertragen der zweiten Mandantenkennung an den zweiten Mandanten (108b) durch das Netzwerkfreigabemodul (116), wobei der zweite Mandant (108b) mindestens eine zweite Gruppenkennung und mindestens einen zweiten Transportdiensttyp zurückgibt, die jeweils der mindestens einen zweiten Gruppenkennung basierend auf der zweiten Mandantenkennung entsprechen, die von dem Netzwerkfreigabemodul (116) zugewiesen worden ist,
ein Anfordern an die Steuerung (114) durch das Netzwerkfreigabemodul (116), mindestens einen zweiten Paketkopf für den mindestens einen zweiten Transportdiensttyp zu erzeugen,
ein Anfordern an die Steuerung (114) durch das Netzwerkfreigabemodul (116), die Vielzahl von Flusstabellen der Vielzahl von Weiterleitungsgeräten (1062) nach dem mindestens einen zweiten Paketkopf zu aktualisieren, wobei Datenpakete des zweiten Benutzergeräts (102b) über das gemeinsam genutzte Transportnetzwerk an das zweite Kernnetzwerk (110b) übertragen werden,
ein Abbilden der mindestens einen ersten Gruppenkennung auf den mindestens einen ersten Paketkopf basierend auf einer Zuordnungstabelle, und
ein Abbilden der mindestens einen zweiten Gruppenkennung auf den mindestens einen zweiten Paketkopf basierend auf der Zuordnungstabelle.

3. Verfahren nach Anspruch 2, wobei der mindestens eine erste Transportdiensttyp und der mindestens eine zweite Transportdiensttyp unterschiedlichen Diensttypen entsprechen.

4. Verfahren nach einem der Ansprüche 2 bis 3, welches ferner die Schritte umfasst:
ein Erzeugen einer ersten Zuordnungstabelle für den ersten Mandanten (108a), wobei die erste Zuordnungstabelle die erste Mandantenkennung, den mindestens eine erste Gruppenkennung und den mindestens einen ersten Transportdiensttyp umfasst, der jeweils der mindestens einen ersten Gruppenkennung entspricht, und
ein Erzeugen einer zweiten Zuordnungstabelle für den zweiten Mandanten (108b), wobei die zweite Zuordnungstabelle die zweite Mandantenkennung, den mindestens einen zweiten Gruppenidentifizierer und den mindestens einen zweiten Transportdiensttyp umfasst, der jeweils der mindestens einen zweiten Gruppenkennung entspricht.

5. Verfahren nach einem der Ansprüche 2 bis 4, welches ferner einen Schritt umfasst:
ein Bereitstellen einer Anforderungsvorlage, so dass der erste Mandant (108a) die erste Anforderung zur gemeinsamen Nutzung von Ressourcen eingibt, wobei die erste Anforderung zur gemeinsamen Nutzung von Ressourcen einen Bandbreitenanforderungswert umfasst.

6. Netzwerkkoordinierungsvorrichtung (116) für ein Netzwerksystem (10), das ein erstes Benutzergerät (102a) aufweist, das über ein gemeinsam genutztes Transportnetzwerk (106) und ein erstes Kernnetzwerk (110a), das von einem ersten Mandanten (108a) gebaut oder gemietet wird, auf das Internet (112) zugreifen kann, wobei die Netzwerkkoordinierungsvorrichtung (116) in Kommunikation zwischen einer Steuerung (114) und dem ersten Mandanten (108a) steht, wobei die Netzwerkkoordinierungsvorrichtung aufweist:
eine Schnittstellenschaltung, und
eine Verarbeitungsschaltung, die mit der Schnittstellenschaltung verbunden ist und die ausgestaltet ist, um:
eine erste Anforderung zur gemeinsamen Nutzung von Ressourcen von dem ersten Mandanten (108a) zu empfangen,
an die Steuerung (114) anzufordern, zu bestimmen, ob die erste Anforderung zur gemeinsamen Nutzung von Ressourcen von einer Ressource des gemeinsam genutzten Transportnetzwerks (106) erfüllt wird, wobei die Steuerung (114) ausgestaltet ist, um eine Vielzahl an Weiterleitungsgeräten (1062) in dem gemeinsam genutzten Transportnetzwerk (106) zu verwalten,
eine erste Mandantenkennung für den ersten Mandanten (108a) zu erzeugen, wenn die Steuerung (114) feststellt, dass die Anforderung zur gemeinsamen Nutzung von Ressourcen von der Ressource des gemeinsam genutzten Transportnetzwerks (106) erfüllt wird,
die erste Mandantenkennung an den ersten Mandanten (108a) zu übertragen, wobei die Netzwerkkoordinierungsvorrichtung von dem ersten Mandanten (108a) mindestens eine erste Gruppenkennung und mindestens einen ersten Transportdiensttyp empfängt, die jeweils der mindestens einen ersten Gruppenkennung basierend auf der ersten Mandantenkennung entsprechen,
an die Steuerung (114) anzufordern, mindestens einen ersten Paketkopf für den mindestens einen ersten Transportdiensttyp zu erzeugen, der jedem der mindestens einen Gruppenkennung entspricht, und
an die Steuerung (114) anzufordern, eine Vielzahl an Flusstabellen der Vielzahl an Weiterleitungsgeräten (1062) gemäß dem mindestens einen ersten Paketkopf zu aktualisieren,
wobei Datenpakete des ersten Benutzergeräts (102a) über das gemeinsam genutzte Transportnetz (106) an das erste Kernnetzwerk (110a) übertragen werden.

7. Netzwerkkoordinierungsvorrichtung nach Anspruch 6, wobei ein zweites Benutzergerät (102b) über das gemeinsam genutzte Transportnetzwerk (106) und ein zweites Kernnetzwerk (110b), das von einen zweiten Mandanten (108b) gebaut oder gemietet wird, auf das Internet (112) zugreifen kann, wobei das Netzwerkfreigabemodul (116) in Kommunikation zwischen der Steuerung (114) und dem zweiten Mandanten (108b) steht und die Verarbeitungsschaltung ferner konfiguriert ist, um:
eine zweite Freigabeanforderung von dem zweiten Mandanten (108b) zu empfangen,
die zweite Anforderung zur gemeinsamen Ressourcennutzung an die Steuerung (114) bereitzustellen, wobei die Steuerung (114) bestimmt, ob die zweite Anforderung zur gemeinsamen Ressourcennutzung von der Ressource des gemeinsam genutzten Transportnetzwerks (106) erfüllt wird,
eine zweite Mandantenkennung für den zweiten Mandanten (108b) zu erzeugen, wenn die Steuerung (114) bestimmt, dass die zweite Anforderung zur gemeinsamen Nutzung von Ressourcen von der Ressource des gemeinsam genutzten Transportnetzwerks (106) erfüllt wird,
die zweite Mandantenkennung an den zweiten Mandanten (108b) zu übertragen, wobei der zweite Mandant (108b) basierend auf der zweiten Mandantenkennung mindestens eine zweite Gruppenkennung und mindestens einen zweiten Transportdiensttyp zurückgibt, die jeweils der mindestens einen zweiten Gruppenkennung entsprechen,
die Steuerung (114) aufzufordern, mindestens einen zweiten Paketkopf für den mindestens einen zweiten Transportdiensttyp zu erzeugen,
die Steuerung (114) aufzufordern, die Vielzahl an Flusstabellen der Vielzahl an Weiterleitungsgeräten (1062) gemäß dem mindestens einen zweiten Paketkopf zu aktualisieren, wobei Datenpakete des zweiten Benutzergeräts (102b) an das zweite Kernnetzwerk (110b) über das gemeinsam genutzte Transportnetzwerk übertragen werden,
die mindestens eine erste Gruppenkennung auf den mindestens einen ersten Paketkopf basierend auf einer Zuordnungstabelle zuzuordnen, und
die mindestens eine zweite Gruppenkennung dem mindestens einen zweiten Paketkopf basierend auf der Zuordnungstabelle zuzuordnen.

8. Netzwerkkoordinierungsvorrichtung nach Anspruch 7, wobei die Verarbeitungsschaltung ferner ausgestaltet ist, um:
erste Zuordnungstabelle für den ersten Mandanten (108a) zu erstellen, wobei die erste Zuordnungstabelle die erste Mandantenkennung, die mindestens eine erste Gruppenkennung und den mindestens einen ersten Transportdiensttyp umfasst, der jeweils der mindestens einen ersten Gruppenkennung entspricht, und
eine zweite Zuordnungstabelle für den zweiten Mandanten (108b) zu erstellen, wobei die zweite Zuordnungstabelle die zweite Mandantenkennung, die mindestens eine zweite Gruppenkennung und den mindestens einen zweiten Transportdiensttyp umfasst, der jeweils der mindestens einen zweiten Gruppenkennung entspricht.

9. Netzwerkkoordinierungsvorrichtung nach einem der Ansprüche 6 bis 8, wobei die Verarbeitungsschaltung ferner ausgestaltet ist, um:
eine Anforderungsvorlage bereitzustellen, so dass der erste Mandant (108a) die erste Anforderung zur gemeinsamen Nutzung von Ressourcen eingibt, wobei die erste Anforderung zur gemeinsamen Nutzung von Ressourcen einen Bandbreitenanforderungswert umfasst.

## Revendications

1. Procédé de partage de ressource de réseau dans un système de réseau (10) dans lequel un premier dispositif utilisateur (102a) peut accéder à l'Internet (112) par l'intermédiaire d'un réseau de transport partagé (106) et d'un premier réseau central (110a) qui a été construit ou loué par un premier locataire (108a), un module de partage de réseau (116) étant en communication entre un contrôleur (114) et le premier locataire (108a), le procédé comprenant les étapes suivantes :
réception, par le module de partage de réseau (116) implanté sur un dispositif de calcul, d'une première demande de partage de ressource émanant du premier locataire (108a) ;
demande, par le module de partage de réseau (116), au contrôleur (114) de déterminer si la première demande de partage de ressource est satisfaite ou non par une ressource du réseau de transport partagé (106), dans lequel le contrôleur (114) est configuré pour gérer une pluralité de dispositifs de réacheminement (1062) dans le réseau de transport partagé (106) ;
génération, par le module de partage de réseau (116), d'un premier identifiant de locataire pour le premier locataire (108a) lorsque le contrôleur (114) détermine que la demande de partage de ressource est satisfaite par la ressource du réseau de transport partagé (106) ;
transmission, par le module de partage de réseau (116), du premier identifiant de locataire au premier locataire (108a), dans lequel le premier locataire (108a) renvoie au moins un premier identifiant de groupe et au moins un premier type de service de transport correspondant à chacun de l'au moins un premier identifiant de groupe sur la base du premier identifiant de locataire attribué par le module de partage de réseau (116) ;
demande, par le module de partage de réseau (116), au contrôleur (114) de générer au moins un premier en-tête de paquet pour l'au moins un premier type de service de transport correspondant à chacun de l'au moins un premier identifiant de groupe ; et
demande, par le module de partage de réseau (116), au contrôleur (114) de mettre à jour une pluralité de tables de flux de la pluralité de dispositifs de réacheminement (1062) en fonction de l'au moins un premier en-tête de paquet,
dans lequel des paquets de données du premier dispositif utilisateur (102a) sont transmis au premier réseau central (110a) au travers du réseau de transport partagé (106).

2. Procédé selon la revendication 1, dans lequel un second dispositif utilisateur (102b) peut accéder à l'Internet (112) par l'intermédiaire du réseau de transport partagé (106) et d'un second réseau central (110b) qui a été construit ou loué par un second locataire (108b), le module de partage de réseau (116) étant en communication entre le contrôleur (114) et le second locataire (108b), le procédé comprenant en outre les étapes suivantes :
réception, par le module de partage de réseau (116), d'une seconde demande de partage de ressource émanant du second locataire (108b) ;
fourniture, par le module de partage de réseau (116), de la seconde demande de partage de ressource au contrôleur (114), dans lequel le contrôleur (114) détermine si la seconde demande de partage de ressource est satisfaite ou non par la ressource du réseau de transport partagé (106) ;
génération, par le module de partage de réseau (116), d'un second identifiant de locataire pour le second locataire (108b) lorsque le contrôleur (114) détermine que la seconde demande de partage de ressource est satisfaite par la ressource du réseau de transport partagé (106) ;
transmission, par le module de partage de réseau (116), du second identifiant de locataire au second locataire (108b), dans lequel le second locataire (108b) renvoie au moins un second identifiant de groupe et au moins un second type de service de transport correspondant à chacun de l'au moins un second identifiant de groupe sur la base du second identifiant de locataire attribué par le module de partage de réseau (116) ;
demande, par le module de partage de réseau (116), au contrôleur (114) de générer au moins un second en-tête de paquet pour l'au moins un second type de service de transport ; et
demande, par le module de partage de réseau (116), au contrôleur (114) de mettre à jour la pluralité de tables de flux de la pluralité de dispositifs de réacheminement (1062) en fonction de l'au moins un second en-tête de paquet, dans lequel des paquets de données du second dispositif utilisateur (102b) sont transmis au second réseau central (110b) au travers du réseau de transport partagé ;
mise en correspondance de l'au moins un premier identifiant de groupe avec l'au moins un premier en-tête de paquet sur la base d'une table de correspondance ; et
mise en correspondance de l'au moins un second identifiant de groupe avec l'au moins un second en-tête de paquet sur la base de la table de correspondance.

3. Procédé selon la revendication 2, dans lequel l'au moins un premier type de service de transport et l'au moins un second type de service de transport correspondent à des types de service différents.

4. Procédé selon l'une quelconque des revendications 2 à 3, comprenant en outre les étapes suivantes :
création d'une première table de correspondance pour le premier locataire (108a), dans lequel la première table de correspondance comprend le premier identifiant de locataire, l'au moins un premier identifiant de groupe, et l'au moins un premier type de service de transport correspondant à chacun de l'au moins un premier identifiant de groupe ; et
création d'une seconde table de correspondance pour le second locataire (108b), dans lequel la seconde table de correspondance comprend le second identifiant de locataire, l'au moins un second identifiant de groupe, et l'au moins un second type de service de transport correspondant à chacun de l'au moins un second identifiant de groupe.

5. Procédé selon l'une quelconque des revendications 2 à 4, comprenant en outre une étape de :
fourniture d'un modèle de demande de façon à ce que le premier locataire (108a) entre la première demande de partage de ressource, dans lequel la première demande de partage de ressource comprend une valeur de demande de bande passante.

6. Appareil de coordination de réseau (116) pour un système de réseau (10) comprenant un premier dispositif utilisateur (102a) pouvant accéder à l'Internet (112) par l'intermédiaire d'un réseau de transport partagé (106) et d'un premier réseau central (110a) qui a été construit ou loué par un premier locataire (108a), l'appareil de coordination de réseau (116) étant en communication entre un contrôleur (114) et le premier locataire (108a), l'appareil de coordination de réseau comprenant :
un circuit d'interface ; et
un circuit de traitement, couplé au circuit d'interface et configuré pour :
recevoir une première demande de partage de ressource émanant du premier locataire (108a) ;
demander au contrôleur (114) de déterminer si la première demande de partage de ressource est satisfaite ou non par une ressource du réseau de transport partagé (106), dans lequel le contrôleur (114) est configuré pour gérer une pluralité de dispositifs de réacheminement (1062) dans le réseau de transport partagé (106) ;
générer un premier identifiant de locataire pour le premier locataire (108a) lorsque le contrôleur (114) détermine que la demande de partage de ressource est satisfaite par la ressource du réseau de transport partagé (106) ;
transmettre le premier identifiant de locataire au premier locataire (108a), dans lequel l'appareil de coordination de réseau reçoit du premier locataire (108a) au moins un premier identifiant de groupe et au moins un premier type de service de transport correspondant à chacun de l'au moins un premier identifiant de groupe sur la base du premier identifiant de locataire ;
demander au contrôleur (114) de générer au moins un premier en-tête de paquet pour l'au moins un premier type de service de transport correspondant à chacun de l'au moins un premier identifiant de groupe ; et
demander au contrôleur (114) de mettre à jour une pluralité de tables de flux de la pluralité de dispositifs de réacheminement (1062) en fonction de l'au moins un premier en-tête de paquet,
dans lequel des paquets de données du premier dispositif utilisateur (102a) sont transmis au premier réseau central (110a) au travers du réseau de transport partagé (106).

7. Appareil de coordination de réseau selon la revendication 6, dans lequel un second dispositif utilisateur (102b) peut accéder à l'Internet (112) par l'intermédiaire du réseau de transport partagé (106) et d'un second réseau central (110b) qui a été construit ou loué par un second locataire (108b), le module de partage de réseau (116) étant en communication entre le contrôleur (114) et le second locataire (108b), et le circuit de traitement est configuré en outre pour :
recevoir une seconde demande de partage de ressource émanant du second locataire (108b) ;
fournir la seconde demande de partage de ressource au contrôleur (114), dans lequel le contrôleur (114) détermine si la seconde demande de partage de ressource est satisfaite ou non par la ressource du réseau de transport partagé (106) ;
générer un second identifiant de locataire pour le second locataire (108b) lorsque le contrôleur (114) détermine que la seconde demande de partage de ressource est satisfaite par la ressource du réseau de transport partagé (106) ;
transmettre le second identifiant de locataire au second locataire (108b), dans lequel le second locataire (108b) renvoie au moins un second identifiant de groupe et au moins un second type de service de transport correspondant à chacun de l'au moins un second identifiant de groupe sur la base du second identifiant de locataire ;
demander au contrôleur (114) de générer au moins un second en-tête de paquet pour l'au moins un second type de service de transport ;
demander au contrôleur (114) de mettre à jour la pluralité de tables de flux de la pluralité de dispositifs de réacheminement (1062) en fonction de l'au moins un second en-tête de paquet, dans lequel des paquets de données du second dispositif utilisateur (102b) sont transmis au second réseau central (110b) au travers du réseau de transport partagé ;
mettre en correspondance l'au moins un premier identifiant de groupe avec l'au moins un premier en-tête de paquet sur la base d'une table de correspondance ; et
mettre en correspondance l'au moins un second identifiant de groupe avec l'au moins un second en-tête de paquet sur la base de la table de correspondance.

8. Appareil de coordination de réseau selon la revendication 7, dans lequel le circuit de traitement est configuré en outre pour :
créer une première table de correspondance pour le premier locataire (108a), dans lequel la première table de correspondance comprend le premier identifiant de locataire, l'au moins un premier identifiant de groupe, et l'au moins un premier type de service de transport correspondant à chacun de l'au moins un premier identifiant de groupe ; et
créer une seconde table de correspondance pour le second locataire (108b), dans lequel la seconde table de correspondance comprend le second identifiant de locataire, l'au moins un second identifiant de groupe, et l'au moins un second type de service de transport correspondant à chacun de l'au moins un second identifiant de groupe.

9. Appareil de coordination de réseau selon l'une quelconque des revendications 6 à 8, dans lequel le circuit de traitement est configuré en outre pour :
fournir un modèle de demande de façon à ce que le premier locataire (108a) entre la première demande de partage de ressource, dans lequel la première demande de partage de ressource comprend une valeur de demande de bande passante.
